(19) Europäisches Patentamt
European Patent Office
Office européen des brevets

(11) **EP 3 228 981 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
***G01B 21/08*** *(2006.01)*      ***G01B 5/06*** *(2006.01)*
***E01C 19/48*** *(2006.01)*      ***E01C 23/01*** *(2006.01)*

(21) Anmeldenummer: **17156219.2**

(22) Anmeldetag: **18.03.2014**

(54) **STRASSENFERTIGER MIT SCHICHTDICKENERFASSUNGSVORRICHTUNG UND VERFAHREN ZUM ERFASSEN DER DICKE EINER EINGEBAUTEN MATERIALSCHICHT**

ROAD FINISHER WITH LAYER THICKNESS DETECTION DEVICE AND METHOD FOR DETECTING THE THICKNESS OF AN INSTALLED MATERIAL LAYER

FINISSEUSE DE ROUTE DOTÉE D'UN DISPOSITIF DE DÉTECTION DE L'ÉPAISSEUR DE COUCHE ET PROCÉDÉ DE DÉTECTION DE L'ÉPAISSEUR D'UNE COUCHE DE MATÉRIAU INSTALLÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.10.2017 Patentblatt 2017/41**

(60) Teilanmeldung:
**18192758.3**

(62) Dokumentnummer(n) der früheren Anmeldung(en) nach Art. 76 EPÜ:
**15193387.6 / 3 048 199**
**14160503.0 / 2 921 588**

(73) Patentinhaber: **MOBA Mobile Automation AG**
**65555 Limburg (DE)**

(72) Erfinder:
• **HORN, Alfons**
  **65555 Limburg (DE)**
• **HORN, Dominik**
  **65555 Limburg (DE)**
• **HILTENKAMP, Thomas**
  **65555 Limburg (DE)**
• **WATERMAN, Markus**
  **65555 Limburg (DE)**

(74) Vertreter: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
DE-A1- 10 025 462      JP-A- 2002 339 314
US-B2- 7 172 363

## Beschreibung

Die vorliegende Erfindung betrifft einen Straßenfertiger gemäß dem Oberbegriff des Patentanspruchs 1, insbesondere einen Straßenfertiger mit einer Schichtdickenerfassungsvorrichtung, sowie ein Verfahren gemäß dem Oberbegriff des Patentanspruchs 13 zum Erfassen der Dicke einer durch einen solchen Straßenfertiger auf einen Untergrund eingebauten Materialschicht.

Allgemein läuft ein Straßenfertiger mit einem Kettenfahrwerk auf einem vorbereitetem Untergrund, auf den eine zu fertigende Straßendecke bzw. ein zu fertigender Straßenbelag aufzubringen ist. Im Regelfall handelt es sich bei dem eingebauten Straßenbelag um ein bituminöses Material, wobei aber ebenso sandige oder steinige Schichten oder Betonschichten eingebaut werden können. In Fahrtrichtung hinten am Straßenfertiger ist eine höhenverstellbare Bohle vorgesehen, an deren Vorderseite ein Vorrat des Straßenbelagmateriales angehäuft ist, der durch eine Fördereinrichtung gefördert und verteilt wird, die dafür Sorge trägt, dass auf der Vorderseite der Bohle immer eine ausreichende, jedoch nicht zu große Menge des Straßenbelagmateriales bevorratet gehalten wird. Die Höhe der Hinterkante der Bohle gegenüber der Oberfläche des vorbereiteten Untergrundes, der gegebenenfalls auch durch eine alte Straßenbelagdecke gebildet sein kann, legt die Dicke der gefertigten Straßendecke vor ihrer anschließenden weiteren Verfestigung durch Walzen fest. Die Bohle ist an einem Zugarm gehalten, der um einen im Mittenbereich des Straßenfertigers angeordneten Zugpunkt drehbeweglich gelagert ist, wobei die Höhenlage der Bohle von einer Hydraulikverstelleinrichtung festgelegt wird.

Fig. 1 zeigt einen bekannten Straßenfertiger, wie er beispielsweise in der EP 0 542 297 A1 beschrieben ist. Der Straßenfertiger ist in seiner Gesamtheit mit dem Bezugszeichen 10 bezeichnet und umfasst ein Kettenfahrwerk 12, mit dem der Straßenfertiger 10 auf dem vorbereiteten Untergrund 14 fährt. An dem in Fahrtrichtung hinteren Ende des Straßenfertigers 10 ist eine höhenverstellbare Bohle 16 angeordnet, die mittels eines Zugarms 18 an einem Zugpunkt 20 an dem Straßenfertiger 10 angelenkt ist. Vor der Bohle 16 befindet sich ein Vorrat 22 des Asphaltmateriales, wobei dieser Vorrat durch entsprechende, an sich bekannte Regelung der Drehzahl einer schneckenartigen Fördereinrichtung 24 im Wesentlichen über den gesamten Breitenbereich der Bohle 16 konstant gehalten wird. Die Bohle 16 schwimmt auf dem Asphalt der zu fertigenden Straßendecke auf. Die Dicke der zu fertigenden Straßendecke vor ihrer Endverfestigung durch Straßenwalzen wird durch Ausregelung der Höhenlage der Hinterkante 26 der Bohle 16 eingestellt. Diese Höhenregelung wird durch Veränderung des Anstellwinkels der Bohle 16 herbeigeführt, und erfolgt typischerweise durch die Ansteuerung von Stellzylindern, die an den vorderen Enden der Zugarme 18 eingreifen. Der Straßenfertiger umfasst drei Ultraschallsensoren 28, 30, 32, die an einer Halterung 34 befestigt sind. Die Halterung 34 ist an dem Zugarm 18 befestigt. Die drei Ultraschallsensoren 28, 30, 32 dienen zur Abtastung einer Referenzfläche, die beispielsweise durch eine bereits gefertigte oder alte Bahn der Straßendecke gebildet sein kann.

Beim Bau einer Straße ist es erwünscht, die erzeugte Schicht möglichst kontinuierlich und in Echtzeit zu messen. Die Ermittlung der Schichtdicke ist beispielsweise erwünscht, um die Qualität des neu eingebauten Straßenbelags zu kontrollieren. Ist die berechnete Schichtdicke, beispielsweise einer bituminösen Schicht, zu gering, dann besteht die Gefahr, dass der Straßenbelag frühzeitig aufbricht, was kostspielige Nachbesserungen des Straßenbelags zur Folge hat. Andererseits ist die Schichtdicke im Hinblick auf die verbaute Materialmenge zu überprüfen, um nicht zu viel Material zu verbauen, was zu erhöhten Kosten führen würde.

Bekannte System zur Ermittlung der Schichtdicke eines neu eingebauten Straßenbelags werden beispielsweise in der EP 2 535 456 A1, der EP 2 535 457 A1 oder der EP 2 535 458 A1 beschrieben. Nachteilig an diesen bekannten Systemen ist, dass diese mechanisch und signalverarbeitungstechnisch aufwendig sind und dennoch keine ausreichende Genauigkeit bei der Ermittlung der Schichtdicke aufweisen.

Die US 7,172,363 B2 beschreibt einen Straßenfertiger mit einem Sensorrahmen, der seitliche Höhensensoren und vordere Höhensensoren vor der Bohle, die jeweils den Abstand zum Untergrund messen, und hintere Höhensensoren hinter der Bohle aufweist, die den Abstand zur eingebauten Materialschicht messen. Der Sensorrahmen ist starr an der Bohle und/oder an dem Zugarm befestigt und die Dicke der eingebauten Materialschicht wird durch die Differenz der Abstandsmesssignale der vorderen und hinteren Höhensensoren bestimmt.

Die Aufgabe der vorliegenden Erfindung besteht darin einen verbesserten Ansatz zur Ermittlung der Schichtdicke einer durch einen Straßenfertiger eingebauten Materialschicht zu schaffen, der weniger aufwendig ist, und der es ermöglicht, die Schichtdicke mit erhöhter Genauigkeit zu ermitteln.

Diese Aufgabe wird durch einen Straßenfertiger nach Anspruch 1, und durch ein Verfahren nach Anspruch 13 gelöst.

Der erfindungsgemäße Straßenfertiger ist vorteilhaft, da die Schichtdickenerfassungsvorrichtung fest an der Bohle befestigt ist, so dass eine genauere Erfassung der Schichtdicke ermöglicht wird, da die Messvorrichtung an der Stelle befestigt ist, an der der tatsächliche Einbau erfolgt. Der Ursprung eines Koordinatensystems zur Erfassung der Schichtdicke liegt an eben der Stelle, an der der tatsächliche Einbau des Materials stattfindet. Ferner erleichtert der erfindungsgemäße Ansatz die Installation, da die Schichtdickenerfassungsvorrichtung lediglich an der Bohle befestigt werden muss, insbesondere ist keine Befestigung an einem anderen Bereich des Straßenfertigers erforderlich, was das Messsystem z.B. aufgrund der Bewegung des Straßenfertigers negativ beeinflusst.

Der erfindungsgemäße Ansatz ist ferner vorteilhaft, da lediglich einfach bestimmbare Größen in die Berechnung einfließen, nämlich die durch die Sensoren erfassten Abstandssignale sowie die gut bestimmbaren Abstände der Sensoren bezüglich der Bohlenhinterkante, so dass auf einfache Art und Weise mit geringem signalverarbeitungstechnischen Aufwand eine genaue Bestimmung der Schichtdicke bezogen auf den Punkt, an dem der Einbau der Schicht erfolgt, nämlich bezogen auf die Bohlenhinterkante, durchgeführt werden kann.

Gemäß Ausführungsbeispielen sind die Abstände des ersten Sensors und des zweiten Sensors von der Bohlenhinterkante und die Anbringungshöhen des ersten Sensors und des zweiten Sensors in Bezug zu der Bohlenhinterkante gleich, und die Signalverarbeitungseinheit ist konfiguriert, um die Schichtdicke der eingebauten Materialschicht basierend auf den Sensorsignalen von dem ersten Sensor und von dem zweiten Sensor, und der Anbringungshöhe des ersten Sensors und des zweiten Sensors in Bezug zu der Bohlenhinterkante zu erfassen.

Der erfindungsgemäße Ansatz gemäß diesem Ausführungsbeispiel ist vorteilhaft, da unter der Annahme der gleichen Abstände der Sensoren bezüglich der Bohlenhinterkante die Bestimmung der Schichtdicke stark vereinfacht werden kann, wobei im Rahmen einer ersten, guten Näherung für kleine Winkeländerungen nur noch die Anbringungshöhe der Sensoren und die Sensorsignale in die Berechnung einfließen.

Die Schichtdicke der eingebauten Materialschicht kann wie folgt bestimmt werden:

$$h_b = s_2 + s_1 - 2B$$

mit:

$h_B$ = Schichtdicke der eingebauten Materialschicht,
$s_1$ = von dem ersten Sensor erfasster erster Abstand zu der eingebauten Materialschicht,
$s_2$ = von dem zweiten Sensor erfasster zweiter Abstand zu dem Untergrund, und
$B$ = Anbringungshöhe des ersten Sensors und des zweiten Sensors in Bezug zu der Bohlenhinterkante.

Gemäß weiteren Ausführungsbeispielen sind die Anbringungshöhen des ersten Sensors und des zweiten Sensors in Bezug zu der Bohlenhinterkante gleich, und die Schichtdicke der eingebauten Materialschicht kann wie folgt bestimmt werden:

$$h_b = s_2 + \frac{b}{a}s_1 - B\left(\frac{b}{a} + 1\right)$$

mit:

$h_B$ = Schichtdicke der eingebauten Materialschicht,
$s_1$ = von dem ersten Sensor erfasster erster Abstand zu der eingebauten Materialschicht,
$s_2$ = von dem zweiten Sensor erfasster zweiter Abstand zu dem Untergrund,
$B$ = Anbringungshöhe des ersten Sensors und des zweiten Sensors in Bezug zu der Bohlenhinterkante,
$a$ = Abstand des ersten Sensors von der Bohlenhinterkante, und
$b$ = Abstand des zweiten Sensors von der Bohlenhinterkante.

Der erfindungsgemäße Ansatz gemäß diesem Ausführungsbeispiel ist vorteilhaft, da er auf einfache Art und Weise eine Berechnung der Schichtdicke ermöglicht, wobei die Sensoren abhängig von den Gegebenheiten auch mit unterschiedlichen Abständen zueinander bezüglich der Bohlenhinterkante angeordnet sein können, wobei die Berechnung vereinfacht ist, da die Sensoren mit gleicher Höhe bezüglich der Bohlenhinterkante eingebaut sind.

Gemäß weiteren Ausführungsbeispielen sind die Anbringungshöhen des ersten Sensors und des zweiten Sensors in Bezug zu der Bohlenhinterkante gleich, und die Schichtdicke der eingebauten Materialschicht kann wie folgt bestimmt werden:

$$h_b = s_2 - c_2 \cdot \sin\left[\alpha_2 + \left(\alpha_1 - arcsin\frac{s_1}{c_1}\right)\right]$$

mit:

$$c_1 = \sqrt{a^2 + B^2},$$

$$c_2 = \sqrt{b^2 + B^2},$$

$$\alpha_1 = arcsin \frac{B}{\sqrt{a^2+B^2}},$$

$$\alpha_2 = arcsin \frac{B}{\sqrt{b^2+B^2}},$$

$h_B$ = Schichtdicke der eingebauten Materialschicht,

$s_1$ = von dem ersten Sensor erfasster erster Abstand zu der eingebauten Materialschicht,

$s_2$ = von dem zweiten Sensor erfasster zweiter Abstand zu dem Untergrund,

$B$ = Anbringungshöhe des ersten Sensors und des zweiten Sensors in Bezug zu der Bohlenhinterkante,

$a$ = Abstand des ersten Sensors von der Bohlenhinterkante, und

$b$ = Abstand des zweiten Sensors von der Bohlenhinterkante.

Der erfindungsgemäße Ansatz gemäß diesem Ausführungsbeispiel ist vorteilhaft, da eine hochgenaue Bestimmung der Schichtdicke ermöglicht wird, wobei eine Optimierung des Berechnungsalgorithmus dadurch erreicht wird, dass der Drehpunkt der Messvorrichtung exakt an der Bohlenhinterkante angenommen wird.

Der erfindungsgemäße Ansatz gemäß diesem Ausführungsbeispiel ist vorteilhaft, da aufgrund der Anbringung der Sensoren mit einer Höhe bezüglich der Bohlenhinterkante, die gleich der Dicke der Bohle ist, die Bestimmung der Anbringungshöhe stark vereinfacht ist, beispielsweise kann einfach die bekannte Dicke bzw. Höhe der Bohle als Anbringungshöhe angesetzt werden, ohne dass weitere Schritte zur Bestimmung derselben erforderlich wären.

Gemäß weiteren Ausführungsbeispielen sind die Anbringungshöhen des ersten Sensors und des zweiten Sensors in Bezug zu der Bohlenhinterkante gleich, und die Signalverarbeitungseinheit ist konfiguriert, um eine Kalibrierung zum Bestimmen der Anbringungshöhe durchzuführen, wobei der erste Sensor bei der Kalibrierung den Abstand zu dem Untergrund erfasst.

Der erfindungsgemäße Ansatz gemäß diesem Ausführungsbeispiel ist vorteilhaft, da auf einfache Art und Weise im Rahmen eines Kalibrierungsverfahrens die Anbringungshöhen des ersten Sensors und des zweiten Sensors, die gleich sind, bestimmt werden können, indem der erste Sensor im Rahmen der Kalibrierung ebenfalls den Abstand zu dem Untergrund erfasst. Erfindungsgemäß wird somit auf einfache Art und Weise eine genaue Bestimmung der Anbringungshöhe ermöglicht, was auch im Fall der Anbringung der Sensoren auf Höhe der Bohlenoberkante möglich ist, um eine möglichst genaue Anbringungshöhe zu bestimmen.

Die Anbringungshöhe des ersten Sensors und des zweiten Sensors in Bezug zu der Bohlenhinterkante kann wie folgt bestimmt werden:

$$B = \frac{s_2 + s_1}{2},$$

mit:

$s_1$ = von dem ersten Sensor erfasster erster Abstand zu dem Untergrund,

$s_2$ = von dem zweiten Sensor erfasster zweiter Abstand zu dem Untergrund, und

$B$ = Anbringungshöhe des ersten Sensors und des zweiten Sensors in Bezug zu der Bohlenhinterkante.

Die Schichtdickenerfassungsvorrichtung umfasst zumindest einen Träger, der unbeweglich an der Bohle befestigt ist, wobei der erste Sensor an dem Träger mit einem ersten Abstand von der Bohlenhinterkante angeordnet ist. Gemäß Ausführungsbeispielen ist der zweite Sensor an dem Träger mit einem zweiten Abstand von der Bohlenhinterkante angeordnet. Der erfindungsgemäße Ansatz gemäß diesem Ausführungsbeispiel ist vorteilhaft, da unter Verwendung des Trägers der Abstand der Sensoren bezüglich der Bohlenhinterkante ohne Weiteres eingestellt werden kann, so dass der erste Sensor sicher die eingebaute Materialschicht abtastet und der zweite Sensor sicher den Untergrund abtastet.

Gemäß Ausführungsbeispielen umfasst der Träger einen Messbalken, der an der Bohle befestigt ist, wobei der erste Sensor an einem ersten Ende des Messbalkens mit dem ersten Abstand von der Bohlenhinterkante angeordnet ist, und wobei der zweite Sensor an einem zweiten Ende des Messbalkens mit dem zweiten Abstand von der Bohlenhinterkante angeordnet ist.

Gemäß Ausführungsbeispielen ist der Messbalken starr und an einer Oberseite der Bohle unbeweglich befestigt.

Die Verwendung eines Messbalkens gemäß diesem Ausführungsbeispiel ist vorteilhaft, da hierdurch eine einfache Befestigung der Messanordnung an der Bohle ermöglicht wird, wobei insbesondere aufgrund der Tatsache, dass der Messbalken bereits an seinen beiden Enden die jeweiligen Sensoren umfasst, eine einfache Befestigung an der Bohle und insbesondere auch eine einfache Ausrichtung der Sensoren bezüglich der Bohle sichergestellt ist. Bei anderen Ausführungsbeispielen kann vorgesehen sein, mehrere solcher Messbalken mit entsprechenden Sensoren entlang der Breite der Bohle anzuordnen. Aufgrund der starren Ausgestaltung des Messbalkens und der beweglichen Befestigung desselben an der Oberseite der Bohle wird eine einfache und sichere Messung sichergestellt.

Gemäß weiteren Ausführungsbeispielen umfasst der Träger einen ersten starren Träger, der der Bohle unbeweglich befestigt ist und an dem der erste Sensor mit dem ersten Abstand von der Bohlenhinterkante angeordnet ist, und einen zweiten starren Träger, der der Bohle unbeweglich befestigt ist und an dem der zweite Sensor mit dem zweiten Abstand von der Bohlenhinterkante angeordnet ist.

Dieses Ausführungsbeispiel ist vorteilhaft, da anstelle eines gemeinsamen Messbalkens zur Befestigung der zwei Sensoren auch getrennte Messbalken bzw. getrennte starre Träger vorgesehen sein können, um so, abhängig von den Gegebenheiten, den ersten Sensor und den zweiten Sensor an unterschiedlichen Positionen bezüglich der Bohlenhinterkante und bezüglich der Bohlenhinterkante anzuordnen, beispielsweise mit unterschiedlichen Abständen zur Bohlenhinterkante und/oder mit unterschiedlichen Anbringungshöhen.

Gemäß Ausführungsbeispielen umfassen der erste Sensor und der zweite Sensor Ultraschallsensoren, Lasersensoren, Mikrowellensensoren oder eine Kombination aus diesen.

Erfindungsgemäß wird somit ein Ansatz geschaffen, der eine kontinuierliche Bestimmung der Schichtdicke an einem Straßenfertiger ermöglicht, die eine der wichtigsten Aufgaben zur Ermittlung von Qualitätsparametern beim Asphalteinbau darstellt. Im Stand der Technik sind zwar die oben erwähnten, verschiedenen Messverfahren bekannt, um die Schichtdicke bei Asphalteinbau zu ermitteln, ohne jedoch eine Genauigkeit zu erreichen, die in einem akzeptablen Bereich liegt, der sinnvoll für die Anwendung genutzt werden kann. Erfindungsgemäß wird daher ein Ansatz gelehrt, bei dem die Schichtdickenmessung ein Messverfahren verwendet, welches eine erhöhte Genauigkeit aufweist, was insbesondere dadurch erreicht wird, dass eine Messvorrichtung vorgesehen ist, die fest an der Bohle installiert ist.

Ausführungsbeispiele der vorliegenden Erfindung werden nachfolgend unter Bezugnahme auf die Figuren näher erläutert. Es zeigen:

Fig. 1    einen bekannten Straßenfertiger;

Fig. 2    einen Straßenfertiger gemäß einem Ausführungsbeispiel der vorliegenden Erfindung;

Fig. 3    eine schematische Darstellung der Bohlengeometrie, wie sie beispielsweise bei einem Straßenfertiger, wie er in Fig. 2 gezeigt ist, verwendet wird;

Fig. 4    die Lage des XY-Koordinatensystems bezüglich der Bohlenhinterkante;

Fig. 5    das anhand der Fig. 4 erläuterte Koordinatensystem (XY-Koordinatensystem) mit einer Abstraktion der Größen für die Schichtdickenmessung;

Fig. 6    das in Fig. 3 gezeigte, nunmehr geneigte Bohlengeometrie;

Fig. 7    abstrakt die anhand der Fig. 6 erläuterten Messgrößen und deren geometrischen Zusammenhang;

Fig. 8    schematisch die geometrischen Kenngrößen, die zur Bestimmung der Schichtdicke mit erhöhter Genauigkeit herangezogen werden;

Fig. 9    eine schematische Bohlengeometrie ähnlich wie in Fig. 8, jedoch bei einer um den Winkel $\Delta\alpha$ gegenüber der Y-Achse verkippten Bohle;

Fig. 10   eine schematische Draufsichtdarstellung auf eine mögliche Installation des Schichtdickenmesssystems gemäß der vorliegenden Erfindung; und

Fig. 11   eine alternative Ausgestaltung der erfindungsgemäßen Messvorrichtung, bei der die Sensoren über getrennte, starre Träger an der Bohlenstruktur befestigt sind

Bei der nachfolgenden Beschreibung von Ausführungsbeispielen der Erfindung werden gleiche oder gleichwirkende Elemente mit den gleichen Bezugszeichen versehen.

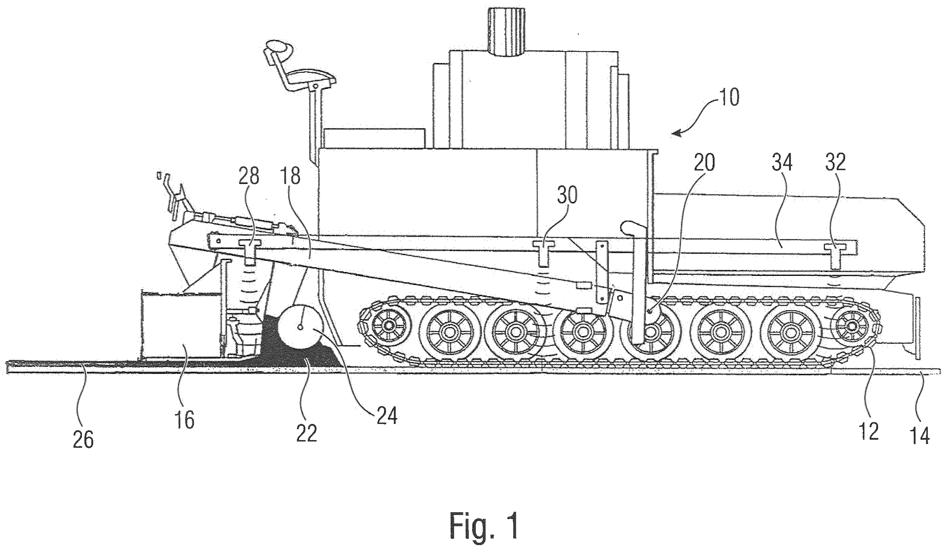

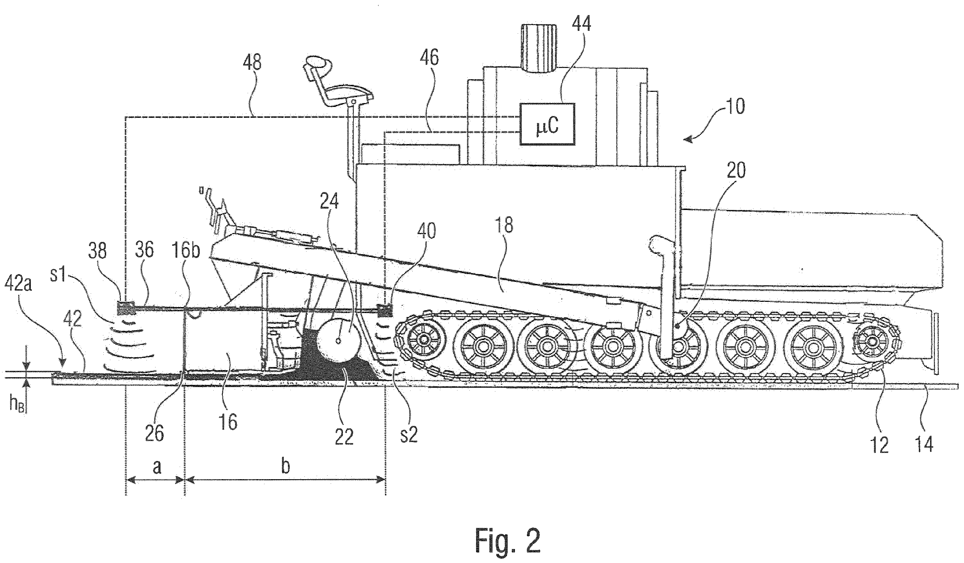

Fig. 2 zeigt einen Straßenfertiger gemäß einem Ausführungsbeispiel der vorliegenden Erfindung. Der in Fig. 2 gezeigte Straßenfertiger ist dem in Fig. 1 gezeigten Straßenfertiger ähnlich, umfasst jedoch die erfindungsgemäße Schichtdickenerfassungsvorrichtung. Der in Fig. 2 gezeigte Straßenfertiger umfasst nicht die in Fig. 1 gezeigten Ultraschallsensoren und die gezeigte Halterung, stattdessen ist die erfindungsgemäße Schichtdickenerfassungsvorrichtung an der Bohle 16 befestigt. Alternativ können die in Fig. 1 gezeigten Sensoren zur Regelung des Einbaus der Materialschicht beibehalten werden. Bei dem in Fig. 2 gezeigten Ausführungsbeispiel umfasst die erfindungsgemäße Schichtdickenerfassungsvorrichtung einen Träger 36, der starr und unbeweglich an der Oberseite der Bohle 16 befestigt ist, so dass der Träger 36 sich mit der Bohle 16 bewegt. An einem ersten Ende des Trägers 36 ist mit einem Abstand a von der Bohlenhinterkante 26 in Fahrtrichtung hinter der Bohle 16 ein erster Sensor 38 angeordnet. An einem zweiten Ende des Trägers 36 ist ein zweiter Sensor 40 mit einem Abstand b von der Bohlenhinterkante 26 in Fahrtrichtung vor der Bohle 16 angeordnet, ebenfalls ein Ultraschallsensor oder ein Lasersensor, der ein Abstandssignal s2 erzeugt. Der erste Sensor 38 kann ein Ultraschallsensor, ein Lasersensor oder ein Mikrowellensensor sein, und erzeugt ein Abstandssignal s1, welches den Abstand von dem ersten Sensor 38 zur Oberfläche 42a der eingebauten Schicht 42 angibt. Der zweite Sensor 40 kann ein Ultraschallsensor , ein Lasersensor oder ein Mikrowellensensor sein, und erzeugt ein Abstandssignal s2, welches den Abstand von dem zweiten Sensor 40 zu dem Untergrund 14 angibt. Die Schichtdickenerfassungsvorrichtung umfasst ferner eine Signalverarbeitungseinrichtung 44, die in Fig. 2 schematisch dargestellt ist, und die beispielsweise Teil einer Steuerung des Straßenfertigers 10 sein kann. Alternativ kann die Signalverarbeitungseinrichtung auch unabhängig von anderen Elementen des Straßenfertigers vorgesehen sein. Bei dem gezeigten Ausführungsbeispiel kann die Signalverarbeitungseinrichtung 44 als Mikrocontroller ausgestaltet sein, der von den Sensoren 38 und 40 über schematisch dargestellte Verbindungen 46, 48 Daten empfängt, welche den gemessenen Abstand s1 bzw. s2 widerspiegeln. Basierend auf den empfangenen Abstandssignalen s1 und s2 sowie basierend auf den Abständen a, b der Sensoren 38, 40 von der Bohlenhinterkante 26 und basierend auf der Anbringungshöhe B der Sensoren 38 und 40 bezogen auf die Bohlenhinterkante 26 bzw. über der Bohlenhinterkante 26 bestimmt die Signalverarbeitungseinrichtung 44 die Schichtdicke $h_B$ der eingebauten Schicht 42. Die Signalverarbeitungseinrichtung 44 kann die Schichtdicke $h_B$ kontinuierlich oder zu fest vorbestimmten Zeitintervallen erfassen, ausgeben und/oder speichern, wobei zu diesem Zweck die Signalverarbeitungseinrichtung ferner einen Speicher und/oder eine Anzeige umfassen kann, die in Fig. 2 nicht näher dargestellt sind.

Bei dem in Fig. 2 dargestellten Ausführungsbeispiel ist der Träger 36 schematisch dargestellt und ist an einer Bohlenoberkante 16b starr und unbeweglich befestigt, so dass sich der Träger 36 und damit auch die Sensoren 38 und 40 zusammen mit der Bohle bewegen, so dass durch die nachfolgend näher erläuterte Art und Weise mittels eines in der Verarbeitungseinrichtung 44 ausgeführten Berechnungsalgorithmus, wie oben erwähnt, die Schichtdicke $h_B$ der eingebauten Schicht 42 bestimmt werden kann. In einem solchen Fall beträgt die Anbringungshöhe der Sensoren 38, 40 über der Bohlenhinterkante 26 eine Höhe, die gleich der Dicke B bzw. der Höhe B der Bohle 16 ist.

Der erfindungsgemäße Ansatz zur Schichtdickenmessung, beispielsweise beim Asphalteinbau mit dem in Fig. 2 dargestellten Straßenfertiger 10, beruht darauf, dass die zwei Höhensensoren 38, 40 vorgesehen sind, die in einer Linie längs der Fahrtrichtung des Straßenfertigers 10 und, gemäß einem Ausführungsbeispiel abstandssymmetrisch zur Bohlenhinterkante 26 so angeordnet sind, dass der Sensor 38 den Abstand s1 zur Asphaltoberfläche 42a der eingebauten Asphaltschicht 42 misst, und dass der Sensor 40 den Abstand s2 zum Untergrund 14 misst. Die beiden Sensoren 38, 40 sind mit der Fertigerbohle 16, mittels des Trägers 36, starr verbunden, insbesondere so, dass sich nur geringe Verwindungen einstellen können.

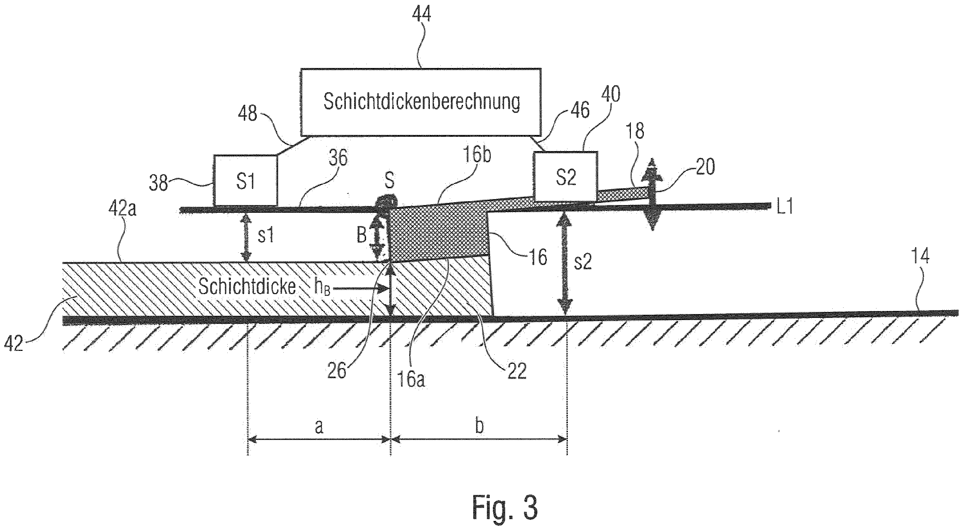

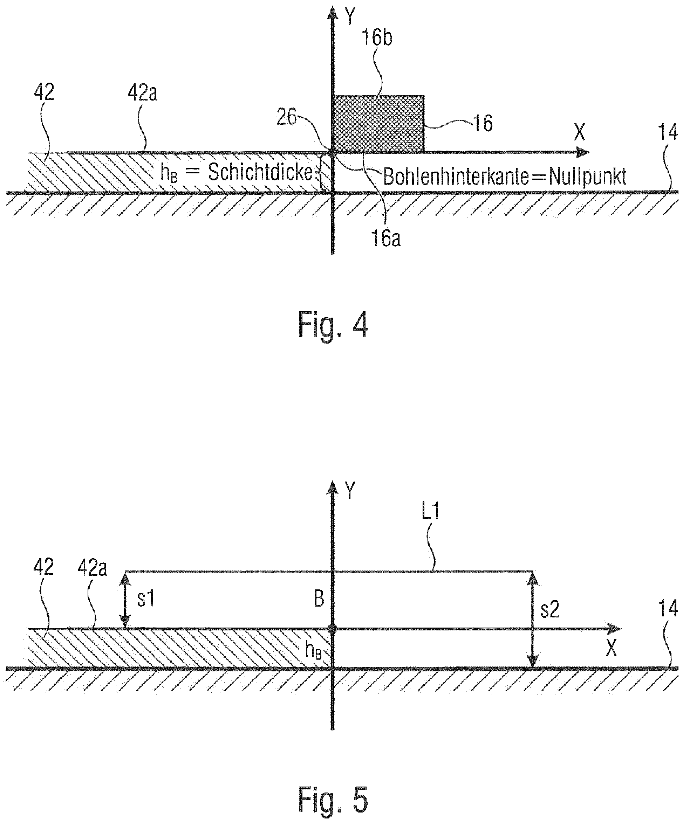

Nachfolgend wird anhand der Fig. 3 der erfindungsgemäße Ansatz zur Bestimmung der Schichtdicke gemäß einem ersten Ausführungsbeispiel näher erläutert. Fig. 3 zeigt eine schematische Darstellung der Bohlengeometrie, wie sie beispielsweise bei einem Straßenfertiger, wie er in Fig. 2 gezeigt ist, aber auch bei anderen Straßenfertigern zum Einsatz kommen kann. Fig. 3 zeigt den schematischen Aufbau für die Schichtdickenmessung unter Verwendung der Abstandssensoren 38 und 40 sowie unter Zugrundelegung der zugehörigen Abstandsmesswerte s1 und s2. In Fig. 3 ist ein Symmetriepunkt S angezeigt, der sich direkt über der Bohlenhinterkante 26 befindet, und der von der in Fig. 3 gezeigten Linie L1 durchlaufen wird. Gemäß dem gezeigten Ausführungsbeispiel sind die Sensoren 38, 40, wie oben erwähnt, über den Träger 36 starr mit der Fertigerbohle 16 verbunden, und zwar so, dass sich keinerlei Verwindungen in Richtung der gedachten Linie L1 einstellen, insbesondere keine Verwindungen in vertikaler Richtung. Der Abstand B, welcher die Anbringungshöhe der Sensoren bezüglich der Bohlenhinterkante 26 angibt, liegt zwischen dem Symmetriepunkt S und der Oberfläche 42a der eingebauten Asphaltschicht 42. Der Abstand B stellt bei dem gezeigten Ausführungsbeispiel näherungsweise einen konstanten Wert dar, selbst dann wenn die Bohle 16 über den Zugpunkt 20 in der Längsneigung verfahren wird. Die Linie L1 stellt eine Bezugslinie für die Sensoren 38 und 40 dar, und gleichzeitig auch die Anbringungshöhe bzw. Montagehöhe in Bezug auf den Symmetriepunkt S. In diesem Zusammenhang kann die Linie L1 auch als Montagebezugslinie bezeichnet werden. Die Abstände a und b sind die Abstände bzw. Installationsabstände der Sensoren 38 und 40 bezogen auf die Bohlenhinterkante 26 bzw. auf den Symmetriepunkt S. Das Koordinatensystem für die Schichtdickenmessung unter Verwendung der Sensoren 38 und 40 befindet sich direkt an der Bohlenhinterkante 26, wie dies in Fig. 4 verdeutlicht ist, welche die Lage des XY-Koordinatensystems bezüglich der Bohlenhinterkante 26 darstellt. Genauer gesagt liegt der Y-Nullpunkt des Koordinatensystems direkt an der Bohlenhinterkante 26, wobei die Abstreifkante den X-Nullpunkt festlegt. Das Koordinatensystem folgt der Bewegung der Bohlenhinterkante 26 während des Einbauprozesses, wobei die X-Achse in ihrer Erstreckung negativ vom Nullpunkt aus mit der Straßenoberfläche 42a zusammenfällt.

Für die Herleitung der gemäß dem ersten Ausführungsbeispiel verwendeten Berechnungsgleichung für die Schichtdicke $h_B$ sei nachfolgend auf die Fig. 5 Bezug genommen, welche eine Abstraktion der gemessenen Größen für die Schichtdickenmessung darstellt. In Fig. 5 ist das anhand der Fig. 4 erläuterte Koordinatensystem (XY-Koordinatensystem) dargestellt, sowie die Dicke $h_B$ der eingebauten Schicht 42 sowie die Abstandsmesswerte s1 und s2 der Sensoren, die in Fig. 2 erläutert wurden, und zwar die Abstände bezüglich der Asphaltoberfläche 42a bzw. bezüglich des Untergrunds 14, ausgehend von der Linie L1, die gegenüber dem Nullpunkt des Koordinatensystems um die Einbauhöhe B der Sensoren in positiver Y-Richtung beabstandet ist. Bei der gerade beschriebenen Ausführungsform wird davon ausgegangen, dass die Sensoren 38 und 40 jeweils gleichen Abstand zum Nullpunkt haben, also betragsmäßig den gleichen Abstand entlang der X-Richtung zum Nullpunkt haben. Unter Zugrundelegung der anhand der Figuren 3 bis 5 beschriebenen Geometrie kann gemäß dem dargelegten Ausführungsbeispiel die Schichtdicke $h_B$ wie folgt bestimmt werden:

$$h_B = s_2 + s_1 - 2B \qquad (1)$$

Ändert sich die Neigung der Bezugslinie L1 (siehe Fig. 3) symmetrisch um die Y-Koordinatenachse, so behält die oben angegebene Gleichung im Wesentlichen ihre Gültigkeit, da die Summe der Signale s1 + s2 annähernd konstant bleibt, wie dies nachfolgend noch näher erläutert wird. Die Herleitung der obigen Gleichung (1) wird nachfolgend näher erläutert, wobei gemäß dem dargestellten Ausführungsbeispiel folgende Annahmen getroffen sind:

- die Abstände a, b der Sensoren 38, 40 zur Bohlenhinterkante 26 (zum Symmetriepunkt S) sind gleich, d.h. a = b
- die Sensoren 38 und 40 befinden sich auf der gedachten Linie L1 und sind starr mit der Bohle 16, beispielsweise mittels des Trägers 36, verbunden,
- der Sensor 38 misst den Abstand s1 zur Asphaltoberfläche 42a
- der Sensor 40 misst den Abstand s2 zum Untergrund 14,
- der Abstand B ist konstant und stellt die Entfernung zwischen der Linie L1 und der Hinterkante 26 der Bohle 16 in Y-Richtung dar, und
- die Linie L1 verläuft zunächst parallel zum Untergrund 14.

Aus der Fig. 5 lässt sich unter Zugrundelegung der obigen Annahmen die Schichtdicke gemäß folgender Gleichung direkt ablesen:

$$h_B = s_2 - s_1 = s_2 - B \qquad (2)$$

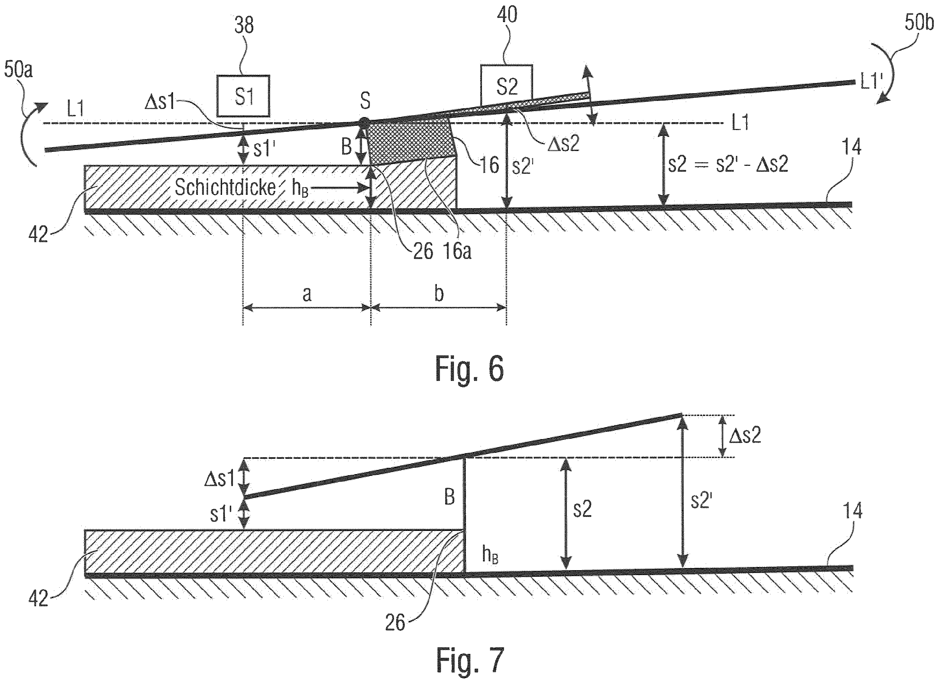

Aufgrund einer Bewegung der Bohle kann es nun zu einer Neigung der Linie L1 kommen, wobei eine Änderung der Neigung des Messsystems anhand der Fig. 6 dargestellt ist. Durch eine Änderung der Lage bzw. der Neigung der Linie L1 zur Linie L1', symmetrisch um den Symmetriepunkt S, beispielsweise aufgrund einer Veränderung des Bohlenanstellwinkels, wie es in Fig. 6 gezeigt ist, werden sich die Messwerte s1 und s2 symmetrisch um $\Delta$s1 und $\Delta$s2 verändern. Damit die Gleichung (2) weiterhin Gültigkeit behält, muss die Linie L1' wieder parallel zum Untergrund 14 ausgerichtet werden, was dadurch erreicht wird, dass die Linie L1' um die Werte $\Delta$s1 bzw. $\Delta$s2 bezogen auf den Symmetriepunkt S gedreht wird, wie dies beispielhaft durch die Pfeile 50a und 50b in Fig. 6 dargestellt ist. Korrigiert man nun den Wert s2', welcher der Messwert ist, der durch den Sensor 40 bei der geänderten Bohlenneigung erfasst wird, um $\Delta$s2, so erhält man wieder den ursprünglichen Messwert s2, also den Messwert, der sich für die gedachte und parallel zum Untergrund 14 (Koordinatenachse X) verlaufende Linie L1 ergeben würde. Der Wert $\Delta$s2 kann allerdings nicht direkt gemessen werden und stellt lediglich eine Hilfsgröße dar, die im Gleichungssystem aufgelöst werden kann. Die Fig. 7 verdeutlicht abstrakt die anhand der Fig. 6 erläuterten Messgrößen und deren geometrischen Zusammenhang. Der oben erwähnte Zusammenhang zwischen dem vom Sensor 40 tatsächlich gemessenen Messwert s2' mit dem bei horizontaler Linie L1 erfassten ursprünglichen Messwert s2 ist wie folgt:

$$s_2 = s_2' - \Delta s_2 \qquad (3)$$

Setzt man die Gleichung (3) in die Gleichung (2) ein, so erhält man:

$$h_B = s_2 - B = s_2' - \Delta s_2 - B \qquad (4)$$

Der, wie oben erwähnt, nicht direkt messbare Wert $\Delta$s2 wird nun unter Verwendung des Messwerts s1' des ersten Sensors 38 und der Anbringungshöhe B beschrieben, wobei, wie sich aus Fig. 7 ergibt, aus Symmetriegründen

Folgendes gilt:

$$\Delta s_2 = \Delta s_1 = B - s_1' \tag{5}$$

Setzt man die Gleichung 5 in die Gleichung 4 ein, so erhält man:

$$h_B = s_2' - (B - s_1') - B \tag{6}$$

Nach Auflösen ergibt sich dann:

$$h_B = s_2' + s_1' - 2B \tag{7}$$

In Gleichung (7) sind s1' und s2' die von den Sensoren gemessenen Abstände, wobei sich durch Verallgemeinerung der Messwerte s1' und s2' zu den Messwerten s1 und s2 die Gleichung 1 ergibt, nämlich

$$h_B = s_2 + s_1 - 2B \tag{8}$$

Erfindungsgemäß wird somit die Schichtdicke gemäß dem dargestellten Ausführungsbeispiel durch Addieren der von den Sensoren erhaltenen Messwerte und der Subtraktion der doppelten Konstante B erhalten, wie dies oben dargelegt wurde. Gemäß dem Ausführungsbeispiel ist somit eine einfache Berechnungsvorschrift bereitgestellt, die eine Schichtdickenbestimmung mit hoher Genauigkeit bei einfacher mechanischer Ausgestaltung der Messvorrichtung und mit einem einfachen Berechnungsalgorithmus ermöglicht.

Bei den oben beschriebenen Ausführungsbeispielen wurde der Einfachheit halber davon ausgegangen, dass die Abstände der Sensoren 38, 40 von der Bohlenhinterkante 26 gleich sind, was jedoch nicht zwingend erforderlich ist, und insbesondere abhängig von Gegebenheiten, die durch den Aufbau des Straßenfertigers vorgegeben sein können, auch nicht möglich sein kann. Der erfindungsgemäße Ansatz gilt jedoch gleichermaßen für einen unsymmetrischen Aufbau, bei dem die Abstände a und b der Sensoren 38 und 40 von der Bohlenhinterkante 26 unterschiedlich sind. In diesem Fall muss lediglich eine Korrektur der oben genannten Korrekturgrößen Δs2 bzw. Δs1 nach dem Strahlensatz erfolgen, und es ergibt sich folgender Zusammenhang:

$$\frac{\Delta s_1}{a} = \frac{\Delta s_2}{b} \tag{9}$$

Aus der Gleichung (9) folgt:

$$\Delta s_2 = \frac{b}{a} \cdot \Delta s_1 \tag{10}$$

Führt man die obige Herleitung der Gleichungen 3 bis 8 nochmals durch, jetzt unter Verwendung der Gleichung 9, so erhält man:

$$h_B = s_2 - \left(\frac{b}{a} \cdot [B - s_1]\right) - B \tag{11}$$

woraus sich nach Auflösung die Schichtdicke wie folgt ergibt:

$$h_B = s_2 + \frac{b}{a} s_1 - B \left(\frac{b}{a} + 1\right) \tag{12}$$

In Gleichung 11 gibt die Konstante B die Anbringungshöhe der Sensoren 38 und 40 in Bezug auf die Bohlenhinterkante 26 wieder, wie dies oben anhand der Figuren 3 und 5 erläutert wurde, wobei bei den bevorzugten Ausführungsbeispielen die Konstante B gleich der Höhe der Bohle ist. Bei anderen Ausführungsbeispielen kann die Befestigung des Trägers mit einem Abstand von der Bohlenoberkante 16a erfolgen, so dass hier die Konstante B die Dicke der Bohle sowie den zusätzlichen Abstand des Trägers über der Bohle angibt. Bei wiederum anderen Ausführungsbeispielen kann die Anbringungshöhe der Sensoren 38 und 40 in Bezug auf die Bohlenhinterkante 26 geringer sein als die Bohlendicke.

Gemäß Ausführungsbeispielen kann vorgesehen sein, vor dem Beginn des Einbaus eine Kalibrierung des Systems durchzuführen, um die Konstante B für die nachfolgende Bestimmung der Schichtdicke sicher zu ermitteln. Ausgehend von der Gleichung 1 lässt sich die Konstante B wie folgt berechnen:

$$B = \frac{s_2 + s_1 - h_B}{2}$$

Diese Konstante kann während einer Systemkalibrierung ermittelt werden und bleibt als konstante Kenngröße im Schichtdickenmesssystem gespeichert. Im Rahmen der Systemkalibrierung, die vor dem eigentlichen Einbau der Schicht 42 durchgeführt wird, erfolgt eine Messung mittels der Sensoren 38 und 40, die nunmehr beide auf den Untergrund 14 Bezug nehmen, da aufgrund der fehlenden Schicht 42 die in Gleichung 12 angegebene Schichtdicke zu null wird, so dass im Rahmen der Systemkalibrierung die Konstante B wie folgt bestimmt werden kann:

$$B = \frac{s_2 + s_1}{2}$$

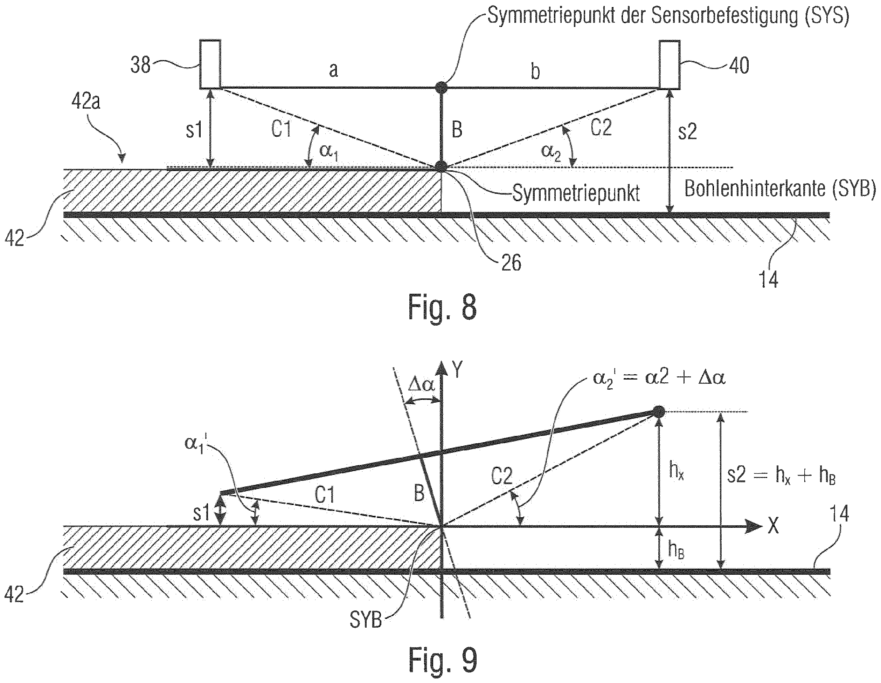

Die oben beschriebenen Ausführungsbeispiele stellen eine erste, gute Annäherung für die Schichtdickenberechnung dar, die insbesondere bei kleinen Winkeländerungen sehr gute und genaue Ergebnisse liefert, wie entsprechende Versuchsreihen und Tests zeigen. Ferner eignet sich dieser vereinfachte Ansatz zur Ermittlung der Konstante B im Rahmen einer Systemkalibrierung. Nachfolgend werden Ausführungsbeispiele beschrieben, bei denen eine noch genauere Berechnung der Schichtdicke ermöglicht wird, wobei für eine weitere Optimierung, ausgehend von dem oben beschriebenen, ersten Ausführungsbeispiel, der Drehpunkt der Messvorrichtung exakt an der Bohlenhinterkante 26 angenommen wird. Fig. 8 zeigt schematisch die geometrischen Kenngrößen, die zur Bestimmung der Schichtdicke mit erhöhter Genauigkeit herangezogen werden. In Fig. 8 ist der Symmetriepunkt S, der bei der vereinfachten Berechnung noch an der Bohlenoberkante, nämlich dort, wo der Träger befestigt ist, angenommen war, nunmehr an der Bohlenhinterkante 26 angenommen. Dies führt dazu, dass die Sensoren 38, 40 eine Art Schwenkbewegung ausführen, die zu keiner symmetrischen Positionsveränderung der Sensoren 38, 40 bezüglich des in Fig. 4 gezeigten Bohlenkoordinatensystems führt. Wie anhand der Fig. 4 bereits erläutert wurde, bezieht sich das Koordinatensystem zur Berechnung der Schichtdicke auf die Bohlenhinterkante und die neu gelegte Asphaltschicht 42, wobei der Höhepunkt des Koordinatensystems an der Bohlenhinterkante 26 liegt, und die X-Achse in der Oberfläche 42a der bereits gelegten Asphaltschicht liegt. Das so bestimmte Koordinatensystem wird als Bohlenkoordinatensystem bezeichnet, welches während des Einbaus festgelegt ist. Allerdings kann sich die Bohle 16 während des Einbaus selbst in ihrer Lage im Koordinatensystem je nach dem Bohlenanstellwinkel ändern.

In der Fig. 8 sind verschiedene konstante Kenngrößen angegeben, die bei der erfindungsgemäßen Schichtdickenbestimmung gemäß dem Ausführungsbeispiel für eine hochgenaue Berechnung der Schichtdicke zum Einsatz kommen. Festgelegt sind die Größen a, b und B, nämlich die Abstände der Sensoren 38 und 40 von der Bohlenhinterkante 26 sowie deren Anbringungshöhe bezüglich der Bohlenhinterkante 26. Unter Verwendung dieser festgelegten Größen können die in Fig. 8 gezeigten Größen C1, C2, $\alpha$1, $\alpha$2 und ebenso die später noch erläuterten Größen $\alpha$1' und $\alpha$2' berechnet werden, wobei sich C1 und C2 wie folgt ergeben:

$$c_1 = \sqrt{a^2 + B^2}$$

$$c_2 = \sqrt{b^2 + B^2}$$

Die in Fig. 8 gezeigten Winkel $\alpha$1 und $\alpha$2 ergeben sich wie folgt:

$$\alpha_1 = arcsin\frac{B}{c_1}$$

$$\alpha_2 = arcsin\frac{B}{c_2}$$

Unter Berücksichtigung der bekannten Werte a, b und B ergeben sich die Winkel wie folgt:

$$\alpha_1 = arcsin\frac{B}{\sqrt{a^2 + B^2}}$$

$$\alpha_2 = arcsin\frac{B}{\sqrt{b^2 + B^2}}$$

Fig. 9 zeigt die schematische Bohlengeometrie ähnlich wie in Fig. 8, jedoch bei einer um den Winkel $\Delta\alpha$ gegenüber der Y-Achse verkippten Bohle, woraus sich die oben bereits erwähnten und in Fig. 9 gezeigten Winkel $\alpha1$' und $\alpha2$' ergeben, wobei sich für einen beliebigen Messwert s1 der Winkel a1' wie folgt berechnet:

$$\alpha_1' = arcsin\frac{s_1}{c_1}$$

Aus $\alpha1$' und $\alpha1$ lässt sich der Verdrehwinkel $\Delta\alpha$ wie folgt bestimmen:

$$\Delta\alpha = \alpha_1 - \alpha_1'$$

Betrachtet man B, C1 und C2 als Ortsvektoren, so wirkt dieser Verdrehwinkel $\Delta\alpha$ in gleicher Weise auf diese Ortsvektoren, so dass sich für a2' folgende Beziehung ergibt:

$$\alpha_2' = \alpha_2 + \Delta\alpha$$

Aus der Fig. 8 lässt sich für die Schichtdicke $h_B$ folgende Gleichung ableiten:

$$h_B = s_2 - h_x$$

für $h_x$ gilt:

$$h_B = s_2 - c_2 \cdot \sin\alpha_2' = s_2 - c_2 \cdot \sin(\alpha_2 + \Delta\alpha)$$

so dass sich für die Schichtdicke die folgende Berechnungsgrundlage ergibt:

$$h_B = s_2 - c_2 \cdot \sin\left[\alpha_2 + \left(\alpha_1 - arcsin\frac{s_1}{c_1}\right)\right]$$

mit:

$$c_1 = \sqrt{a^2 + B^2}$$

$$c_2 = \sqrt{b^2 + B^2}$$

$$\alpha_1 = arcsin \frac{B}{\sqrt{a^2 + B^2}}$$

$$\alpha_2 = arcsin \frac{B}{\sqrt{b^2 + B^2}}$$

wobei B bekannt ist, beispielsweise durch die oben erwähnte Kalibrierung.

Die oben erwähnten Ausführungsbeispiele des erfindungsgemäßen Ansatzes zur Schichtdickenerfassung sind gegenüber herkömmlichen Ansätzen vorteilhaft, da der erfindungsgemäße Messaufbau auf besonders einfache Art und Weise an der Bohle 16 (siehe Figuren 2 und 3) installiert wird, und gemäß Ausführungsbeispielen beispielsweise in ein vorhandenes Nivelliersystem integriert werden kann. Der Abstand der Sensoren bezüglich der Bohlenhinterkante kann gemäß einem bevorzugten Ausführungsbeispiel gleich der Dicke der Bohle sein, so dass es keiner zusätzlicher Einbaustrukturen bedarf, sondern die erfindungsgemäße Messstruktur einfach an der existierenden Bohle befestigt werden kann. Gleichermaßen vorteilhaft kann es sein, einen bestimmten Abstand der Ultraschallsensoren von der zu erfassenden Oberfläche einzustellen, um einen optimalen Messabstand zu erhalten.

Gemäß bevorzugten Ausführungsbeispielen werden die Sensoren möglichst symmetrisch zu der Bohlenhinterkante montiert, so dass sich bei Einsatz der Berechnungsvorschrift gemäß dem ersten Ausführungsbeispiel ausreichend genaue Ergebnisse ergeben, ohne dass ein Einsatz des hochgenauen Berechnungsalgorithmus erforderlich ist. Gemäß Ausführungsbeispielen kann vorgesehen sein, dass der erfindungsgemäße Berechnungsalgorithmus sowohl den ersten Algorithmus als auch den zweiten, genaueren Algorithmus implementiert, wobei beispielsweise abhängig von einer erkannten Verstellung der Bohle, beispielsweise bei Überschreitung eines Grenzwinkels, oder wenn ganz genaue Ergebnisse erwünscht sind die Berechnung der Schichtdicke von dem ersten Algorithmus zu dem zweiten, genaueren Algorithmus umgeschaltet werden kann.

Ferner kann bei Ausführungsbeispielen der Erfindung vorgesehen sein, die von der Schichtdickenmessvorrichtung erfassten Daten betreffend die Schichtdicke für eine aktive Regelung des Straßenfertigers im Hinblick auf eine Position der Bohle zu verwenden, um eine vorgegebene Schichtdicke einzuhalten.

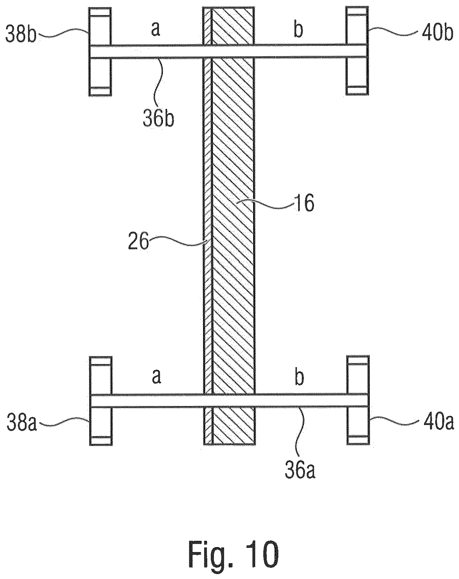

Nachfolgend werden Ausführungsbeispiele beschrieben, die angeben, auf welche Art und Weise die Installation der Sensoren erfolgen kann. Fig. 10 zeigt eine schematische Draufsichtdarstellung auf eine mögliche Installation des Schichtdickenmesssystems gemäß der vorliegenden Erfindung. Wie in Fig. 10 dargestellt ist, umfasst das System zwei Träger oder Messbalken 36a, 36b, die derart an der Bohle 16 befestigt sind, entweder auf der Bohlenoberseite 16b oder beabstandet von der Bohlenoberseite nach oben, wobei jeweils erste Sensoren 38a, 38b und zweite Sensoren 40a, 40b an den jeweiligen Enden der Messbalken 36a, 36b mit den Abständen a, b zur Bohlenhinterkante 26 angeordnet sind.

Neben der in Fig. 10 gezeigten Anordnung kann selbstverständlich auch nur ein Messbalken, aber auch mehr als zwei Messbalken mit entsprechend angeordneten Sensorsystemen vorgesehen sein, wobei sich durch die mehreren Sensoren der Abtastbereich für die Schichtdickenmessung erhöht, so dass sich eine höhere Messwertgenauigkeit einstellt.

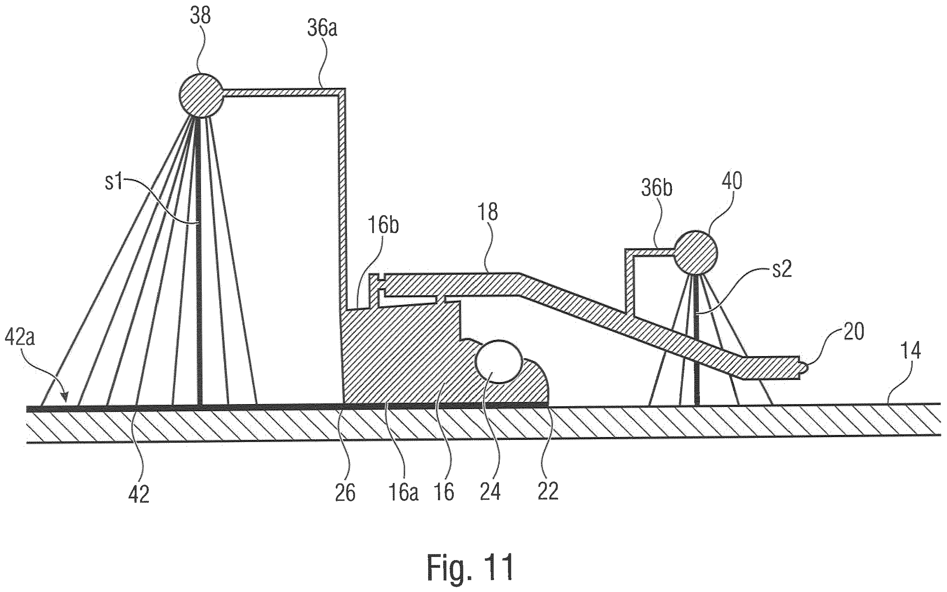

Fig. 11 zeigt eine alternative Ausgestaltung der erfindungsgemäßen Messvorrichtung, bei der die Sensoren 38 und 40 über getrennte, starre Träger 36a, 36b befestigt sind. Wie oben erwähnt, ist wesentlich, dass der Berechnungsalgorithmus Kenntnis über die Anbringungshöhen der Sensoren 38 und 40 hat, die auch unterschiedlich sein können, wie in Fig. 11 gezeigt ist, sowie den Abstand a bzw. b der Sensoren 38, 40 zur Bohlenhinterkante 26. Anders als bei den oben beschriebenen Ausführungsbeispielen, bei denen die Sensoren 38, 40 an entgegengesetzten Enden eines Trägers bzw. Messbalkens angeordnet sind, ist bei dem in Fig. 11 gezeigten Ausführungsbeispiel vorgesehen, den Sensor 38 höher als den Sensor 40 anzuordnen, und zwar über einen starren, an der Bohlenoberkante 16b befestigten Träger 36a, wobei die Befestigung 36a so ist, dass sich der Sensor 38 gemeinsam mit der Bohle 16 bewegt, vorzugsweise so, dass keine Verbindungen auftreten. Der Sensor 40 ist über eine zweite Trägerstruktur 36b an dem Zugarm 18, der die Bohle 16 dreht, befestigt, so dass sowohl der Sensor 38 als auch der Sensor 40 in einer fest bestimmten, gut definierten und sich nicht ändernden Beziehung bezüglich der Bohlenhinterkante 26 angeordnet ist, so dass die oben beschriebenen Ansätze zur Bestimmung der Schichtdicke der eingebauten Schicht 42 auch bei einer Ausgestaltung gemäß Fig. 11 eingesetzt werden können, wobei hier dann zusätzlich noch die unterschiedlichen Höhen der Sensoren 38 und 40 berücksichtigt werden müssen.

Bei den oben beschriebenen Sensoren kann es sich vorzugsweise um Ultraschallsensoren handeln, jedoch können ebenso Laserscanner eingesetzt werden, die dann orthogonale Vektoren zum Untergrund bzw. zur Schicht 42 für die Berechnung der Schichtdicke bereitstellen. Weitere Sensorkonfigurationen können eine Kombination von Ultraschallsensoren und Laserscannern umfassen, wobei auch nur eine einfache Laserabstandsmessung an beiden Messpositionen möglich ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Straßenfertiger, mit:

   einer Bohle (16) zum Einbau einer Materialschicht (42) auf einem Untergrund (14); und
   einer Schichtdickenerfassungsvorrichtung zum Erfassen der Dicke ($h_B$) der eingebauten Materialschicht (42),
   wobei der Straßenfertiger konfiguriert ist, um die von der Schichtdickenerfassungsvorrichtung erfassten Daten betreffend die Schichtdicke für eine aktive Regelung des Straßenfertigers im Hinblick auf eine Position der Bohle zu verwenden, um eine vorgegebene Schichtdicke einzuhalten,
   wobei die Schichtdickenerfassungsvorrichtung einen ersten Sensor (38) in Fahrtrichtung hinter der Bohle (16) zum Erfassen eines ersten Abstands zu der eingebauten Materialschicht (42) und einen zweiten Sensor (40) in Fahrtrichtung vor der Bohle (16) zum Erfassen eines zweiten Abstands zu dem Untergrund (14) umfasst, und wobei

die Schichtdickenerfassungsvorrichtung einen unbeweglich an der Bohle (16) befestigten Träger (36, 36a) umfasst, an dem der erste Sensor (38) mit einem ersten Abstand von der Bohlenhinterkante (26) angeordnet ist, wobei der zweite Sensor (40) an dem Träger (36; 36a) oder an einem weiteren Träger (36b), der an einem Zugarm (18), der die Bohle (16) dreht, befestigt ist, mit einem zweiten Abstand von der Bohlenhinterkante (26) angeordnet ist,

**dadurch gekennzeichnet, dass**

die Schichtdickenerfassungsvorrichtung eine Signalverarbeitungseinheit (44) umfasst, die konfiguriert ist, um die Schichtdicke ($h_B$) der eingebauten Materialschicht (42) basierend auf den Sensorsignalen ($s_1$, $s_2$) von dem ersten Sensor (38) und von dem zweiten Sensor (40), den Abständen (a, b) des ersten Sensors (38) und des zweiten Sensors (40) von der Bohlenhinterkante (26), und den Anbringungshöhen des ersten Sensors (38) und des zweiten Sensors (40) in Bezug zu der Bohlenhinterkante (26) zu erfassen.

2. Straßenfertiger nach Anspruch 1, bei dem

die Abstände (a, b) des ersten Sensors (38) und des zweiten Sensors (40) von der Bohlenhinterkante (26) gleich sind,
die Anbringungshöhen des ersten Sensors (38) und des zweiten Sensors (40) in Bezug zu der Bohlenhinterkante (26) gleich sind, und
die Signalverarbeitungseinheit (44) konfiguriert ist, um die Schichtdicke ($h_B$) der eingebauten Materialschicht (42) basierend auf den Sensorsignalen ($s_1$, $s_2$) von dem ersten Sensor (38) und von dem zweiten Sensor (40), und der Anbringungshöhe des ersten Sensors (38) und des zweiten Sensors (40) in Bezug zu der Bohlenhinterkante (26) zu erfassen.

3. Straßenfertiger nach Anspruch 2, bei dem die Schichtdicke ($h_B$) der eingebauten Materialschicht (42) wie folgt bestimmt wird:

$$h_B = s_2 + s_1 - 2B$$

mit:

$h_B$ = Schichtdicke der eingebauten Materialschicht (42),
$s_1$ = von dem ersten Sensor (38) erfasster erster Abstand zu der eingebauten Materialschicht (42),
$s_2$ = von dem zweiten Sensor (40) erfasster zweiter Abstand zu dem Untergrund (14), und
B = Anbringungshöhe des ersten Sensors (38) und des zweiten Sensors (40) in Bezug zu der Bohlenhinterkante (26).

4. Straßenfertiger nach Anspruch 1, bei dem

die Anbringungshöhen des ersten Sensors (38) und des zweiten Sensors (40) in Bezug zu der Bohlenhinterkante (26) gleich sind, und
die Schichtdicke ($h_B$) der eingebauten Materialschicht (42) wie folgt bestimmt wird:

$$h_B = s_2 + \frac{b}{a} s_1 - B \left( \frac{b}{a} + 1 \right)$$

mit:

$h_B$ = Schichtdicke der eingebauten Materialschicht (42),
$s_1$ = von dem ersten Sensor (38) erfasster erster Abstand zu der eingebauten Materialschicht (42),
$s_2$ = von dem zweiten Sensor (40) erfasster zweiter Abstand zu dem Untergrund (14),
B = Anbringungshöhe des ersten Sensors (38) und des zweiten Sensors (40) in Bezug zu der Bohlenhinterkante (26),
a = Abstand des ersten Sensors (38) von der Bohlenhinterkante (26), und
b = Abstand des zweiten Sensors (40) von der Bohlenhinterkante (26).

5. Straßenfertiger nach Anspruch 1, bei dem
die Anbringungshöhen des ersten Sensors (38) und des zweiten Sensors (40) in Bezug zu der Bohlenhinterkante (26) gleich sind, und
die Schichtdicke ($h_B$) der eingebauten Materialschicht (42) wie folgt bestimmt wird:

$$h_B = s_2 - c_2 \cdot \sin\left[\alpha_2 + \left(\alpha_1 - arcsin\frac{s_1}{c_1}\right)\right]$$

mit:

$$c_1 = \sqrt{a^2 + B^2}$$

$$c_2 = \sqrt{b^2 + B^2}$$

$$\alpha_1 = arcsin\frac{B}{\sqrt{a^2 + B^2}}$$

$$\alpha_2 = arcsin\frac{B}{\sqrt{b^2 + B^2}}$$

$h_B$ = Schichtdicke der eingebauten Materialschicht (42),
$s_1$ = von dem ersten Sensor (38) erfasster erster Abstand zu der eingebauten Materialschicht (42),
$s_2$ = von dem zweiten Sensor (40) erfasster zweiter Abstand zu dem Untergrund (14),
$B$ = Anbringungshöhe des ersten Sensors (38) und des zweiten Sensors (40) in Bezug zu der Bohlenhinterkante (26),
$a$ = Abstand des ersten Sensors (38) von der Bohlenhinterkante (26), und
$b$ = Abstand des zweiten Sensors (40) von der Bohlenhinterkante (26).

6. Straßenfertiger nach einem der Ansprüche 1 bis 5, bei dem die Anbringungshöhe des ersten Sensors (38) und des zweiten Sensors (40) in Bezug zu der Bohlenhinterkante (26) gleich der Dicke der Bohle (16) ist.

7. Straßenfertiger nach einem der Ansprüche 1 bis 6, bei dem
die Anbringungshöhen des ersten Sensors (38) und des zweiten Sensors (40) in Bezug zu der Bohlenhinterkante (26) gleich sind, und
die Signalverarbeitungseinheit (44) konfiguriert ist, um eine Kalibrierung zum Bestimmen der Anbringungshöhe durchzuführen, wobei der erste Sensor (38) bei der Kalibrierung den Abstand zu dem Untergrund (14) erfasst.

8. Straßenfertiger nach Anspruch 7, bei dem die Signalverarbeitungseinheit (44) konfiguriert ist, um die Anbringungshöhe des ersten Sensors (38) und des zweiten Sensors (40) in Bezug zu der Bohlenhinterkante (26) wie folgt zu bestimmen:

$$B = \frac{s_2 + s_1}{2}$$

mit:

$s_1$ = von dem ersten Sensor (38) erfasster erster Abstand zu dem Untergrund (14),
$s_2$ = von dem zweiten Sensor (40) erfasster zweiter Abstand zu dem Untergrund (14), und
$B$ = Anbringungshöhe des ersten Sensors (38) und des zweiten Sensors (40) in Bezug zu der Bohlenhinterkante (26).

**9.** Straßenfertiger nach einem der Ansprüche 1 bis 8, bei dem der Träger (36) einen Messbalken umfasst, der an der Bohle (16) befestigt ist,

wobei der erste Sensor (38) an einem ersten Ende des Messbalkens mit dem ersten Abstand von der Bohlenhinterkante (26) angeordnet ist, und

wobei der zweite Sensor (40) an einem zweiten Ende des Messbalkens mit dem zweiten Abstand von der Bohlenhinterkante (26) angeordnet ist.

**10.** Straßenfertiger nach Anspruch 9, bei dem der Messbalken starr ist und an einer Oberseite der Bohle (16) unbeweglich befestigt ist.

**11.** Straßenfertiger nach einem der Ansprüche 1 bis 8, bei dem der Träger (36) einen ersten starren Träger, der an der Bohle (16) unbeweglich befestigt ist und an dem der erste Sensor (38) mit dem ersten Abstand von der Bohlenhinterkante (26) angeordnet ist, und einen zweiten starren Träger, der an der Bohle (16) unbeweglich befestigt ist und an dem der zweite Sensor (40) mit dem zweiten Abstand von der Bohlenhinterkante (26) angeordnet ist, umfasst.

**12.** Straßenfertiger nach einem der Ansprüche 1 bis 11, bei dem der erste Sensor (38) und der zweite Sensor (40) Ultraschallsensoren, Lasersensoren oder Mikrowellensensoren oder eine Kombination von diesen umfassen.

**13.** Verfahren zum Erfassen der Dicke ($h_B$) einer durch einen Straßenfertiger (10) mit einer Bohle (16) auf einen Untergrund (14) eingebauten Materialschicht (42) durch eine Schichtdickenerfassungsvorrichtung, die einen unbeweglich an der Bohle (16) befestigten Träger (36, 36a) umfasst, an dem ein erster Sensor (38) in Fahrtrichtung hinter der Bohle (16) mit einem ersten Abstand von der Bohlenhinterkante (26) angeordnet ist, wobei ein zweiter Sensor (40) in Fahrtrichtung vor der Bohle (16) an dem Träger (36; 36a) oder an einem weiteren Träger (36b), der an einem Zugarm (18), der die Bohle (16) dreht, befestigt ist, mit einem zweiten Abstand von der Bohlenhinterkante (26) angeordnet ist, wobei der erste Sensor (38) einen ersten Abstand zu der eingebauten Materialschicht (42) erfasst, wobei der zweite Sensor (40) einen zweiten Abstand zu dem Untergrund (14) erfasst, und wobei das Verfahren folgende Schritte aufweist:

Erfassen eines ersten Abstands zu der eingebauten Materialschicht (42);
Erfassen eines zweiten Abstands zu dem Untergrund (14); und
Bestimmen der Schichtdicke ($h_B$) der eingebauten Materialschicht (42),
wobei die von der Schichtdickenerfassungsvorrichtung erfassten Daten betreffend die Schichtdicke für eine aktive Regelung des Straßenfertigers im Hinblick auf eine Position der Bohle verwendet werden, um eine vorgegebene Schichtdicke einzuhalten;
**dadurch gekennzeichnet, dass**
die Schichtdicke ($h_B$) basierend auf den erfassten ersten und zweiten Abständen, den Abständen (a, b) des ersten Sensors (38) und des zweiten Sensors (40) von der Bohlenhinterkante (26), und
den Anbringungshöhen des ersten Sensors (38) und des zweiten Sensors (40) in Bezug zu der Bohlenhinterkante (26) bestimmt wird.

## Claims

**1.** Road paver having:

a screed (16) for applying a material layer (42) to a foundation (14);
a layer thickness detecting device for detecting the thickness ($h_B$) of the material layer (42) applied,
wherein the road paver is configured to use the data concerning the layer thickness detected by the layer thickness detecting device for active regulation of the road paver with respect to a position of the screed for maintaining a predetermined layer thickness,
wherein the layer thickness detecting device includes a first sensor (38) behind the screed (16), in the direction of travel, for detecting a first distance from the applied material layer (42) and a second sensor (40) in front of the screed (16), in the direction of travel, for detecting a second distance from the foundation (14), and
wherein the layer thickness detecting device includes a support (36, 36a) immovably attached to the screed (16) on which the first sensor (38) is arranged at a first distance from the rear screed edge (26), wherein the second sensor (40) is arranged, at a second distance from the rear screed edge (26), at the support (36; 36a) or a further support (36b) that is attached to a pull arm (18) rotating the screech (16).
**characterized in that**

the layer thickness detecting device includes a signal processing unit (44) that is configured to detect the layer thickness ($h_B$) of the applied material layer (42) on the basis of the sensor signals ($s_1$, $s_2$) from the first sensor (38) and from the second sensor (40), of the distances (a, b) of the first sensor (38) and of the second sensor (40) from the rear screed edge (26), and of the attachment heights of the first sensor (38) and the second sensor (40) relative to the rear screed edge (26).

2. Road paver in accordance with claim 1, wherein
the distances (a, b) of the first sensor (38) and of the second sensor (40) from the rear screed edge (26) are the same,
the attachment heights of the first sensor (38) and of the second sensor (40) relative to the rear screed edge (26) are the same, and
the signal processing unit (44) is configured to detect the layer thickness ($h_B$) of the applied material layer (42) on the basis of the sensor signals ($s_1$, $s_2$) from the first sensor (38) and from the second sensor (40), and of the attachment height of the first sensor (38) and of the second sensor (40) relative to the rear screed edge (26).

3. Road paver in accordance with claim 2, wherein the layer thickness ($h_B$) of the applied material layer (42) is determined as follows:

$$h_B = s_2 + s_1 - 2B$$

where:

$h_B$ = layer thickness of the applied material layer (42),
$s_1$ = first distance from the applied material layer (42) detected by the first sensor(38),
$s_2$ = second distance from the foundation (14) detected by the second sensor (40), and
B = attachment height of the first sensor (38) and of the second sensor (40) relative to the rear screed edge (26).

4. Road paver in accordance with claim 1, wherein
the attachment heights of the first sensor (38) and of the second sensor (40) relative to the rear screed edge (26) are the same, and
the layer thickness ($h_B$) of the applied material layer (42) is determined as follows:

$$h_B = s_2 + \frac{b}{a} s_1 - B\left(\frac{b}{a} + 1\right)$$

where:

$h_B$ = layer thickness of the applied material layer (42),
$s_1$ = first distance from the applied material layer (42) detected by the first sensor (38),
$s_2$ = second distance from the foundation (14) detected by the second sensor (40),
B = attachment height of the first sensor (38) and of the second sensor (40) relative to the rear screed edge (26),
a = distance of the first sensor (38) from the rear screed edge (26), and
b = distance of the second sensor (40) from the rear screed edge (26).

5. Road paver in accordance with claim 1, wherein
the attachment heights of the first sensor (38) and of the second sensor (40) relative to the rear screed edge (26) are the same, and
the layer thickness ($h_B$) of the applied material layer (42) is determined as follows:

$$h_B = s_2 - c_2 \cdot \sin\left[\alpha_2 + \left(\alpha_1 - arcsin\frac{s_1}{c_1}\right)\right]$$

where:

$$c_1 = \sqrt{a^2 + B^2}$$

$$c_2 = \sqrt{b^2 + B^2}$$

$$\alpha_1 = arcsin \frac{B}{\sqrt{a^2 + B^2}}$$

$$\alpha_2 = arcsin \frac{B}{\sqrt{b^2 + B^2}}$$

$h_B$ = layer thickness of the applied material layer (42),
$s_1$ = first distance from the applied material layer (42) detected by the first sensor (38),
$s_2$ = second distance from the foundation (14) detected by the second sensor (40),
$B$ = attachment height of the first sensor (38) and of the second sensor (40) relative to the rear screed edge (26),
$a$ = distance of the first sensor (38) from the rear screed edge (26), and
$b$ = distance of the second sensor (40) from the rear screed edge (26).

6. Road paver in accordance with any of claims 1 to 5, wherein the attachment height of the first sensor (38) and of the second sensor (40) relative to the rear screed edge (26) is equal to the thickness of the screed (16).

7. Road paver in accordance with any of claims 1 to 6, wherein
the attachment heights of the first sensor (38) and of the second sensor (40) relative to the rear screed edge (26) are the same, and
the signal processing unit (44) is configured to perform a calibration for determining the attachment height, wherein during the calibration the first sensor (38) detects the distance from the foundation (14).

8. Road paver in accordance with claim 7, wherein the signal processing unit (44) is configured to determine the attachment height of the first sensor (38) and of the second sensor (40) relative to the rear screed edge (26) as follows:

$$B = \frac{s_2 + s_1}{2}$$

where:

$s_1$ = first distance from the foundation (14) detected by the first sensor (38),
$s_2$ = second distance from the foundation (14) detected by the second sensor (40),
$B$ = attachment height of the first sensor (38) and of the second sensor (40) relative to the rear screed edge (26).

9. Road paver in accordance with any of claims 1 to 8, wherein the support (36) includes a measuring bar that is attached to the screed (16),
wherein the first sensor (38) is arranged at a first end of the measuring bar at the first distance from the rear screed edge (26), and
wherein the second sensor (40) is arranged at a second end of the measuring bar at the second distance from the rear screed edge (26).

10. Road paver in accordance with claim 9, wherein the measuring bar is rigid and is immovably attached to a top side of the screed (16).

11. Road paver in accordance with any of claims 1 to 8, wherein the support (36) includes a first rigid support that is immovably attached to the screed (16) and on which the first sensor (38) is arranged at the first distance from the rear screed edge (26), and a second rigid support that is immovably attached to the screed (16) and on which the second sensor (40) is arranged at the second distance from the rear screed edge (26).

12. Road paver in accordance with any of claims 1 to 11, wherein the first sensor (38) and the second sensor (40) include ultrasound sensors, laser sensors, or microwave sensors, or a combination thereof.

13. Method for detecting the thickness ($h_B$) of a material layer (42) applied to a foundation (14) by using a road paver (10) with a screed (16) by means of a thickness detecting device including a support (36, 36a) immovably attached to the screed (16) on which a first sensor (38) is arranged behind the screed (16), in the direction of travel, at a first distance from the rear screed edge (26), wherein a second sensor (40) is arranged in front of the screed (16), in the direction of travel, at the support (36; 36a) or a further support (36b) that is attached to a pull arm (18) rotating the screech (16), at a second distance from the rear screed edge (26), wherein the first sensor (38) detects a first distance from the applied material layer (42), wherein the second sensor (40) detects a second distance from the foundation (14), the method including the following steps:

detecting a first distance from the applied material layer (42);
detecting a second distance from the foundation (14); and
determining the layer thickness ($h_B$) of the applied material layer (42), the data concerning the layer thickness detected by the layer thickness detecting device being used for active regulation of the road paver with respect to a position of the screed for maintaining a predetermined layer thickness;
**characterized in that**
the layer thickness ($h_B$) is determined on the basis of the detected first and second distances, of the distances (a, b) of the first sensor (38) and of the second sensor (40) from the rear screed edge (26), and of the attachment heights of the first sensor (38) and of the second sensor (40) relative to the rear edge of the screed (16).

**Revendications**

1. Finisseur de route, avec:

une poutre de damage (16) pour l'incorporation d'une couche de matériau (42) sur un sol (14); et
un dispositif de détection d'épaisseur de couche destiné à détecter l'épaisseur ($h_B$) de la couche de matériau incorporée (42),
dans lequel le finisseur de route est configuré pour utiliser les données concernant l'épaisseur de couche saisies par le dispositif de détection d'épaisseur de couche pour une régulation active du finisseur de route en ce qui concerne une position de la poutre de damage, pour maintenir une épaisseur de couche prédéterminée,
dans lequel le dispositif de détection d'épaisseur de couche comporte un premier capteur (38) dans la direction de conduite derrière la poutre de damage (16), destiné à détecter une première distance par rapport à la couche de matériau incorporée (42), et un deuxième capteur (40) dans la direction de conduite devant la poutre de damage (16), destiné à détecter une deuxième distance par rapport au sol (14), et
dans lequel le dispositif de détection d'épaisseur de couche comporte un support (36, 36a) fixé de manière immobile à la poutre de damage (16), sur lequel est disposé le premier capteur (38) à une première distance du bord arrière de poutre de damage (26), dans lequel le deuxième capteur (40) est disposé sur le support (36; 36a) ou sur un autre support (36b) qui est fixé à un bras de traction (18) qui fait tourner la poutre de damage (16), à une deuxième distance du bord arrière de poutre de damage (26),
**caractérisé par le fait que**
le dispositif de détection d'épaisseur de couche comporte une unité de traitement de signal (44) qui est configurée pour détecter l'épaisseur de couche ($h_B$) de la couche de matériau incorporée (42) sur base des signaux de capteur ($s_1$, $s_2$) du premier capteur (38) et du deuxième capteur (40), des distances (a, b) du premier capteur (38) et du deuxième capteur (40) par rapport au bord arrière de poutre de damage (26), et des hauteurs de placement du premier capteur (38) et du deuxième capteur (40) par rapport au bord arrière de poutre de damage (26).

2. Finisseur de route selon la revendication 1, dans lequel
les distances (a, b) du premier capteur (38) et du deuxième capteur (40) par rapport au bord arrière de poutre de damage (26) sont identiques,
les hauteurs de placement du premier capteur (38) et du deuxième capteur (40) par rapport au bord arrière de poutre de damage (26) sont identiques, et
l'unité de traitement de signal (44) est configurée pour détecter l'épaisseur de couche ($h_B$) de la couche de matériau incorporée (42) sur base des signaux de détection ($s_1$, $s_2$) du premier capteur (38) et du deuxième capteur (40), et de la hauteur de placement du premier capteur (38) et du deuxième capteur (40) par rapport au bord arrière de poutre de damage (26).

3. Finisseur de route selon la revendication 2, dans lequel l'épaisseur de couche ($h_B$) de la couche de matériau incorporée (42) est déterminée comme suit:

$$h_B = s_2 + s_1 - 2B$$

avec:

$h_B$ = épaisseur de la couche de matériau incorporée (42),
$s_1$ = première distance détectée par le premier capteur (38) par rapport à la couche de matériau incorporée (42),
$s_2$ = deuxième distance détectée par le deuxième capteur (40) par rapport au sol (14), et
B = hauteur de placement du premier capteur (38) et du deuxième capteur (40) par rapport au bord arrière de poutre de damage (26).

4. Finisseur de route selon la revendication 1, dans lequel
les hauteurs de placement du premier capteur (38) et du deuxième capteur (40) par rapport au bord arrière de poutre de damage (26) sont identiques, et
l'épaisseur de couche ($h_B$) de la couche de matériau incorporée (42) est déterminée comme suit:

$$h_B = s_2 + \frac{b}{a}s_1 - B\left(\frac{b}{a} + 1\right)$$

avec:

$h_B$ = épaisseur de la couche de matériau incorporée (42),
$s_1$ = première distance détectée par le premier capteur (38) par rapport à la couche de matériau incorporée (42),
$s_2$ = deuxième distance détectée par le deuxième capteur (40) par rapport au sol (14),
B = hauteur de placement du premier capteur (38) et du deuxième capteur (40) par rapport au bord arrière de poutre de damage (26),
a = distance du premier capteur (38) par rapport au bord arrière de poutre de damage (26), et
b = distance du deuxième capteur (40) par rapport au bord arrière de poutre de damage (26).

5. Finisseur de route selon la revendication 1, dans lequel
les hauteurs de placement du premier capteur (38) et du deuxième capteur (40) par rapport au bord arrière de poutre de damage (26) sont identiques, et
l'épaisseur de couche ($h_B$) de la couche de matériau incorporée (42) est déterminée comme suit:

$$h_B = s_2 - c_2 \cdot \sin\left[\alpha_2 + \left(\alpha_1 - arcsin\frac{s_1}{c_1}\right)\right]$$

avec:

$$c_1 = \sqrt{a^2 + B^2}$$

$$c_2 = \sqrt{b^2 + B^2}$$

$$\alpha_1 = arcsin\frac{B}{\sqrt{a^2 + B^2}}$$

$$\alpha_2 = arcsin \frac{B}{\sqrt{b^2 + B^2}}$$

$h_B$ = épaisseur de la couche de matériau incorporée (42),

$s_1$ = première distance détectée par le premier capteur (38) par rapport à la couche de matériau incorporée (42),

$s_2$ = deuxième distance détectée par le deuxième capteur (40) par rapport au sol (14),

B = hauteur de placement du premier capteur (38) et du deuxième capteur (40) par rapport au bord arrière de poutre de damage (26),

a = distance du premier capteur (38) par rapport au bord arrière de poutre de damage (26), et

b = distance du deuxième capteur (40) par rapport au bord arrière de poutre de damage (26).

6. Finisseur de route selon l'une des revendications 1 à 5, dans lequel la hauteur de placement du premier capteur (38) et du deuxième capteur (40) par rapport au bord arrière de poutre de damage (26) est égale à l'épaisseur de la poutre de damage (16).

7. Finisseur de route selon l'une des revendications 1 à 6, dans lequel les hauteurs de placement du premier capteur (38) et du deuxième capteur (40) par rapport au bord arrière de poutre de damage (26) sont identiques, et l'unité de traitement de signal (44) est configurée pour effectuer un étalonnage pour déterminer la hauteur de placement, le premier capteur (38) détectant, lors de l'étalonnage, la distance par rapport au sol (14).

8. Finisseur de route selon la revendication 7, dans lequel l'unité de traitement de signal (44) est configurée pour déterminer la hauteur de placement du premier capteur (38) et du deuxième capteur (40) par rapport au bord arrière de poutre de damage (26) comme suit:

$$B = \frac{s_2 + s_1}{2}$$

avec:

$s_1$ = première distance détectée par le premier capteur (38) par rapport à la couche de matériau incorporée (42),

$s_2$ = deuxième distance détectée par le deuxième capteur (40) par rapport au sol (14),

B = hauteur de placement du premier capteur (38) et du deuxième capteur (40) par rapport au bord arrière de poutre de damage (26).

9. Finisseur de route selon l'une des revendications 1 à 8, dans lequel le support (36) comporte une poutre de mesure qui est fixée à la poutre de damage (16),

dans lequel le premier capteur (38) est disposé à une première extrémité de la poutre de mesure à la première distance du bord arrière de poutre de damage (26), et

dans lequel le deuxième capteur (40) est disposé à une deuxième extrémité de la poutre de mesure à la deuxième distance du bord arrière de poutre de damage (26).

10. Finisseur de route selon la revendication 9, dans lequel la poutre de mesure est rigide et est fixée de manière immobile à une face supérieure de la poutre de damage (16).

11. Finisseur de route selon l'une des revendications 1 à 8, dans lequel le support (36) comporte un premier support rigide fixé de manière immobile à la poutre de damage (16) et sur lequel est disposé le premier capteur (38) à la première distance du bord arrière de poutre de damage (26), et un deuxième support rigide fixé de manière immobile à la poutre de damage (16) et sur lequel est disposé le deuxième capteur (40) à la deuxième distance du bord arrière de poutre de damage (26).

12. Finisseur de route selon l'une des revendications 1 à 11, dans lequel le premier capteur (38) et le deuxième capteur (40) comportent des capteurs à ultrasons, des capteurs laser ou des capteurs à micro-ondes ou une combinaison de ces derniers.

13. Procédé pour détecter l'épaisseur ($h_B$) d'une couche de matériau (42) incorporée par un finisseur de route (10) avec une poutre de damage (16) sur un sol (14) par un dispositif de détection d'épaisseur de couche qui comporte un support (36, 36a) fixé de manière immobile à la poutre de damage (16), sur lequel est disposé un premier capteur (38), dans la direction de conduite derrière la poutre de damage (16), à une première distance du bord arrière de poutre de damage (26), dans lequel un deuxième capteur (40) est disposé, dans la direction de conduite devant la poutre de damage (16), sur le support (36; 36a) ou sur un autre support (36b) qui est fixé à un bras de traction (18) qui fait tourner la poutre de damage (16), à une deuxième distance du bord arrière de poutre de damage (26), le premier capteur (38) détectant une première distance par rapport à la couche de matériau intégrée (42), le deuxième capteur (40) détectant une deuxième distance par rapport au sol (14), et le procédé présentant les étapes suivantes consistant à:

détecter une première distance par rapport à la couche de matériau incorporée (42);
détecter une deuxième distance par rapport au sol (14); et
déterminer l'épaisseur ($h_B$) de la couche de matériau incorporée (42), où les données concernant l'épaisseur de couche détectées par le dispositif de détection d'épaisseur de couche sont utilisées pour une régulation active du finisseur de route en ce qui concerne une position de la poutre de damage, pour maintenir une épaisseur de couche prédéterminée;
**caractérisé par le fait que**
l'épaisseur de couche ($h_B$) est déterminée sur base des première et deuxième distances détectées, des distances (a, b) du premier capteur (38) et du deuxième capteur (40) par rapport au bord arrière de poutre de damage (26), et des hauteurs de placement du premier capteur (38) et du deuxième capteur (40) par rapport au bord arrière de poutre de damage (26).

Fig. 1

Fig. 2

EP 3 228 981 B1

Fig. 3

EP 3 228 981 B1

42    42a

16b

26    16

16

X    14

$h_B$ = Schichtdicke    Bohlenhinterkante=Nullpunkt

16a

# Fig. 4

Y

L1

42  42a

s1    B    s2  14

$h_B$    X

# Fig. 5

Fig. 6

Fig. 7

Fig. 8

Fig. 9

EP 3 228 981 B1

38b — □ a ☒ b □ — 40b
       36b
                    16
26
       a       b
38a — □    □ — 40a
         36a

Fig. 10

Fig. 11

EP 3 228 981 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0542297 A1
- EP 2535456 A1
- EP 2535457 A1
- EP 2535458 A1
- US 7172363 B2